(19) **Europäisches Patentamt**

**European Patent Office**

**Office européen des brevets**

(11) **EP 1 401 771 B1**

(12) **EUROPEAN PATENT SPECIFICATION**

| | |
|---|---|
| (45) Date of publication and mention of the grant of the patent:<br>**07.06.2006 Bulletin 2006/23** | (51) Int Cl.:<br>**C02F 1/50** (2006.01) |
| (21) Application number: **03735994.0** | (86) International application number:<br>**PCT/IT2003/000375** |
| (22) Date of filing: **17.06.2003** | (87) International publication number:<br>**WO 2003/106350 (24.12.2003 Gazette 2003/52)** |

(54) **METHOD AND PLANT FOR CONTROLLING THE COLONIZATION OF SUBMERGED STRUCTURE SURFACES BY AQUATIC FILTERING ORGANISMS**

VERFAHREN UND VORRICHTUNG ZUR KONTROLLE DER KOLONISIERUNG GETAUCHTER STRUKTURIERTER OBERFLÄCHEN DURCH AQUATISCHE, FILTRIERENDE ORGANISMEN

PROCEDE ET INSTALLATION PERMETTANT DE REGULER LA COLONISATION DES SURFACES DE STRUCTURES IMMERGEES PAR DES ORGANISMES FILTRANTS AQUATIQUES

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**LT LV** | • **DANOVARO, Roberto**<br>**I-16126 Genova (IT)** |
| (30) Priority: **18.06.2002 IT RM20020341** | (74) Representative: **Germinario, Claudio**<br>**Società Italiana Brevetti S.p.A.**<br>**Piazza di Pietra 39**<br>**00186 Roma (IT)** |
| (43) Date of publication of application:<br>**31.03.2004 Bulletin 2004/14** | (56) References cited:<br>**EP-A- 0 457 439**       **US-A- 6 106 730**<br>**US-A- 6 164 244**      **US-B1- 6 284 793** |
| (73) Proprietor: **CHIMEC S.P.A.**<br>**I-00144 Roma RM (IT)** | • **FRALEIGH ET AL: "AWWA Zebra Mussel Research Project Results" PROCEEDINGS OF THE AWWA ANNUAL CONFERENCE, 23 June 1991 (1991-06-23), pages 103-117, XP002080235** |
| (72) Inventors:<br>• **BUCCOLINI, Marco**<br>**I-62032 Camerino (IT)**<br>• **ZANOTTI, Andrea**<br>**I-00042 Anzio (IT)** | • **SHAW B.A.: 'NORTHCOAST PLANKTON IDENTIFICATION AND MONITORING PROGRAM' CAN. TECH. REP. FISH. AQUAT. SCI. no. 2386, 2001, pages 19 - 22** |

**Description**

Technical Field of the Invention

The present invention relates to the control and/or the prevention of the colonization of submerged structure surfaces by aquatic filtering organisms.

More specifically, the present invention relates to the control and/or the prevention of the colonization by aquatic filtering organisms that may foul submerged conduits of industrial plants.

Prior state of the art

Large-sized power plants and different greater coastal industries use enormous amounts of water for steam generation, as well as for turbine running and general service.

The greatest water source is represented by sea, lakes and rivers, yet the content of algae, bacteria and microorganisms causes serious problems due to the fact that plants are fouled: also larvae and young individuals of plankton species, like cirripeds and mussels, may be let in with the water, and their colonization in the inside of the exchangers causes a decrease in the effectiveness and finally the complete shutdown of the plant itself.

In these plants, control of the fouling due to aquatic organisms has always been related to the use of chlorine: historically, its application, in a continuous or discontinuous manner, has been the most widely adopted choice, above all to fight microbiological lime.

However, it is known that to control a fouling due to largish-sized aquatic organisms the discontinuous use is often ineffective, whereas a continuous addition has often been selected, even at lower dosages.

The advantages of chlorine use as control method are essentially related to its very low price. However, from the early '70s, organic chlorine by-products had been identified in effluents during water chlorination, and a few toxicity assays sufficed to highlight the high environmental hazardousness of these by-products, even at concentrations of a few parts per billion (ppb).

Over the last 20 years, the environmental impact and public hygiene implications due to chlorine-based treatments drove the quest for a valid alternative: some methods were introduced, based on chemical as well as on physical alternatives.

Physical methods comprise the use of ultrasounds, thermal shocks, UV light, filters, powders or abrasive means, etc. Actually, each of these methods entails marked drawbacks or is physically inapplicable to systems on which a control is required, and this has prevented their widespread use.

Biocides alternative to chlorine are ozone, bromine, bromine chloride, hydrogen peroxide: the high cost and the uncertainty on the toxicity of the by-products of these biocides (bromine organic derivatives, ozonides, peroxides and epoxides), have quelled the drive towards these alternatives (US Pat. 5,393,781), actually increasing coastal industries' dependence from chlorine use as a method for controlling the fouling due to aquatic organism colonization.

The document EP0457439 describes another prior art process for reducing the growth of zebra mussels.

In the US, the emergency due to the invasion of Zebra mussels *(Dreissena polymorpha),* has roused interest towards alternatives to chlorine: moreover, the heightened attention to water quality, in the US as well as in Europe, above all for lakes and rivers, caused an expectation of reduced release of chemical products into natural ecosystems.

Recently, the Canada-US International Joint Commission recommended the banning of chlorine production and of its use in the Great Lakes basin. It is evident that the non-chemical alternatives to chlorine are greatly favoured over the use of chemical products: however, to date the methods advanced are often deemed ineffective and the supporting data too vague and void of specific validity.

Concerning the manner in which these biocides are released in the environment, the commonly adopted approach is the 'continuous' one, in which the biocide is continuously released in the system and hence into the environment. In order to limit the introduction of pollutants into the environment, a 'discontinuous' system may be adopted, foreseeing an increase of the biocide dose introduced in the environment, but at subsequent times (e.g., about 15 min per hour, hence, only 6-8 hours per day). This latter approach allows to increase the dosage, rendering it more effective against the more resilient species (e.g. mussels) without however dramatically increasing the amount of biocide introduced in the system, and, consequently, released into the environment.

However, it being known that the greater probability of introduction of filtering organisms, like e.g. mussels - and in general of undesired biological species in submerged conduits - subsists in the spring-summer period, the actual technology for the treatment of said structures foresees a lower wintertime dosage and a higher summertime dosage, concomitantly to the temperature rise. Such an approach, though generally functional, allows no 'selective' adaptation for all those events of colonization by said organisms, related to atypical climatic-environmental conditions like sudden temperature rises, etc.

In the light of the above, it appears that the problem of reducing the pollution and the waste of chemical products apt to control the colonization of filtering organisms onto submerged surfaces is still unsolved. Although there have been improvements over the last 30 years, to date said chemical products are still released into the environment abundantly and quite arbitrarily, thereby not allowing to abate the release of said substances into the environment to the bare minimum required.

Hence, scope of the present invention is to solve this problem and to provide a method, and a suitable apparatus, for controlling and/or preventing the colonization of submerged structure surfaces by aquatic filtering organisms, abating to the bare minimum the release of chemical products having a biocidal function into the environment.

SUMMARY OF THE INVENTION

Phytoplankton comprises all the unicellular microalgae that by virtue of their photosynthetic activity are capable of synthesizing organic matter, using mineral salts and carbon dioxide. Hence, phytoplankton is generally considered to be the first link in the alimentary chain (primary producers), constituting the alimentary base for a multitude of organisms belonging to the zooplankton as well as to the benthos. The maximum peak of phytoplankton abundance (called 'phytoplankton bloom') generally occurs, to a greater extent, at the arrival of spring and, to a lesser extent, at the arrival of autumn. E.g., in the Mediterranean Seas said peak is observed to a greater extent in the first months of the year (February-March) and to a lesser extent in autumn time (October-November). Both the adult individuals and the larvae of several filtering bivalves (like e.g. mussels), denominated *veliger,* feed on phytoplankton and on organic particles suspended in the water column. Zooplankton, to which there belong, e.g., *Mytilus* larvae, feeds on phytoplankton and hence finds the greatest availability of food just from this time on. Therefore, following the phytoplankton bloom, and after a constant latency period, a great growth of the zooplankton (called 'zooplankton bloom') occurs. It is evident that the zooplankton response will be all the more intensive the higher it will have been the food availability for the organisms constituting it. Hence, in general it may be stated that, over the year, the quantitative variations of the zooplankton follow those of the phytoplankton, so that consequently to the algal bloom the zooplankton will reach its maximum quantitative development. Accordingly, it is possible to foresee the time and the intensity of the colonization process (that follows the zooplankton bloom) keeping under control the phytoplankton presence, i.e. determining the time-pattern of the phytoplankton biomass, in the water column. The time-pattern of the phytoplankton biomass allows to set the best times for using the biocide for the partial or complete eradication of the infesting filtering organisms at the benthos stage (i.e., not free-swimming like the *veliger* larvae anymore but anchored to the submerged surfaces of interest).

Said pattern may be extrapolated following a monitoring, carried out through a sampling of the waters of interest, of the identification parameters of phytoplankton biomass values like, e.g., a phytoplankton cell count and a biomass estimate through a calculation of the average cellular biovolumes or through an evaluation of the concentration of the photosynthetic pigment chlorophyll-A.

The present invention is based on the surprising possibility of applying said zoological notions to a wholly distinct technical field, i.e. to the industrial one. It follows that a mere monitoring detecting the time-pattern of the phytoplankton biomass can allow to accurately calculate beforehand the pattern of the zooplankton population, comprising the aquatic filtering organisms infesting the waters near potentially colonizable submerged surfaces. Hence, said forecast allows to foresee the period of maximum density of said aquatic filtering organisms in the waters of interest. The accurate assessment of the period at which a maximum density of said organisms will occur in the zones of interest enables a targeted use of biocides. In fact, while to date the biocides are used indiscriminately and nonselectively as indicated above, the use of the method and of the means described in the present application allows to limit the release of biocides into the environment, by one or more treatments, at the periods, calculated beforehand, of maximum density of said organisms. Therefore, this limiting of the biocide treatments allows a drastic abatement of water pollution and a remarkable saving of the chemical products employed.

Hence, the present invention solves two problems; the environmental problem concerning the chemical pollution and the entailed damages to the ecosystem and the economic problem associated to the excessive consumption of biocides.

A further advantage of the present invention is that of being capable of acting, in a targeted manner, also in all those cases in which atypical climatic-environmental conditions may lead to sudden and unexpected blooms of undesired aquatic filtering organisms.

Moreover, the present invention, providing a forecast of the growth curve of said filtering organisms, allows the use of biocide agents at the life stage of development (e.g. at the individuals' size) in which said organisms are more sensitive to the biocides used, further enhancing the effectiveness of the latter. This allows to reduce the biocide (or biocide mixture) doses used, since the biocide may be used in a targeted manner at the time of greater effectiveness.

Another advantage of the present invention is that of allowing correction of the phytoplankton data monitored by salinity value monitoring concomitantly to that of the parameters identifying the biomass values, in marine or brackish environments. This since in waters possibly affluxed by streams of fresh water (it also containing phytoplankton) sudden changes could occur in the monitored phytoplankton values due to the sudden inlet of freshwater phytoplankton organisms. Said organisms, though temporarily constituting a food source for zooplankton, not surviving in salty waters do not really contribute to the pattern of the phytoplankton biomass of interest. Therefore, a monitoring of the salinity of the sampled waters allows to correct the monitored phytoplankton values and to attain a correct phytoplankton biomass pattern.

Hence, object of the present invention is a method for controlling and/or preventing the colonization of submerged structure surfaces by aquatic filtering organisms, comprising the following steps:

a. monitoring the parameters identifying phytoplankton biomass values in waters near said surfaces;

b. determining from said values the time-pattern of the phytoplankton biomass and identifying a time instant at which said pattern exhibits a peak, and;

c. monitoring zooplankton in said time instant and assessing the presence or the absence of zooplankton-stage larvae of said filtering organisms near said surfaces and, in the case of presence of said larvae;

d. calculating as a function of said time instant a period of maximum density of said filtering organisms;

e. subjecting said waters to one or more primary treatments with a biocide or a biocide mixture during said period of maximum density and, optionally,

f. subjecting said waters to one or more secondary treatments with a biocide or a biocide mixture during said periods of minimum density;

g. carrying out further steps of monitoring the zooplankton in said waters.

Object of the present invention is also the aboveindicated method in which the monitoring at a. may be carried out by a manual sampling and a chemico-analytical analysis of the waters of interest, directly monitoring the waters automatically or by a combination of manual sampling and automatic monitoring. Said sampling may be apt to monitor a step of metering the concentration values of the photosynthetic pigment chlorophyll-A, in which said values can be converted into phytoplankton biomass values and in which, when the waters of interest are marine or brackish, concomitantly to the sampling at a. the salinity values of the waters of interest are sampled in order to correct the values monitored at a..

Object of the present invention is also the abovecited method, in which the automatic sampling is carried out by a fluorescence probe.

A further object of the present invention are the aboveindicated methods in which the primary treatments with biocides at e. are carried out from 1 to 8 times, for a duration ranging from 12 to 240 hours, at a biocide (or biocide mixture) concentration ranging from 300 to 0.5 ppm (mg/l) and in which the secondary treatments, at f., when carried out, are carried out from 1 to 8 times, for a duration ranging from 12 to 240 hours at a biocide (or biocide mixture) concentration ranging from 80 to 0.5 ppm.

A further object of the present invention is a plant for controlling and/or preventing the colonization of submerged structure surfaces by aquatic filtering organisms, comprising:

a. means for monitoring parameters identifying phytoplankton biomass values in the waters near said surfaces, said means being selected from the group comprising means for spectrophotometric analysis, means for fluorimetric analysis, means for HPLC analysis and means for fluorimetric analysis on in vivo suspensions;

b. means for processing said values;

c. means for qualitatively and quantitatively monitoring the zooplankton near said surfaces with filtering devices;

d. units for integrating the values processed by the means at a. to the data detected by the means at c;

e. operating means apt to carry out treatments of said waters with biocides.

Said data collecting and managing unit may be apt to apt to automatically receive said data.

Object of the present invention is also a plant in which the means indicated at a. comprises a probe apt to monitor chlorophyll-A concentration values, which may be a fluorescence probe and, optionally, a probe apt to monitor water salinity values. A further object of the invention is a plant comprising processing means apt to process the values monitored at a. into corresponding phytoplankton biomass values, to determine their time-pattern and to identify a time instant in said pattern at which the latter has a maximum or a minimum peak. A further object of the invention is a plant in which the further processing means are apt to calculate, as a function of the time instant at which the pattern of the phytoplankton biomass has a maximum or minimum peak and of the data obtained by the monitoring carried out with the means at d., periods of maximum or minimum density of said filtering organisms.

The processing means used in the abovedescribed system may comprise one or more elaborating computer programs.

Detailed description of the figures

Figure 1 is a graph illustrating the relationship between the phytoplankton biomass pattern expressed in mgC/m$^3$ (mg organic Carbon/m$^3$) (solid-line curve) and the zooplankton density pattern expressed in individuals/m$^3$ (ind/m$^3$) (broken-line curve). In the Figure, there are indicated also the time of the primary treatments with biocides (corresponding to the zooplankton density peak, indicated as primary shock steps) and two possible times of secondary treatment with biocides (indicated as secondary shock steps).

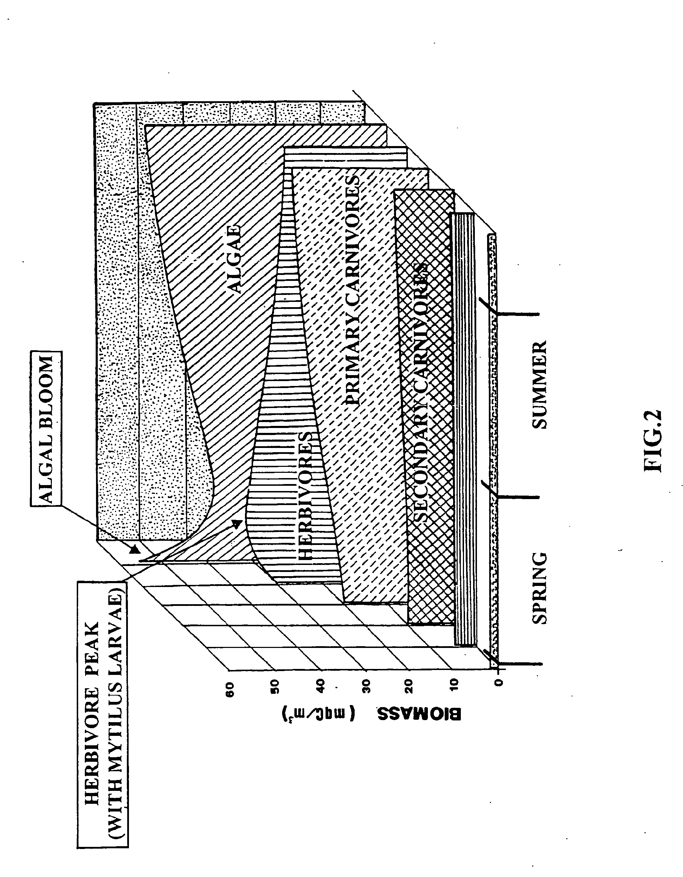

Figure 2 shows a data interpolation indicating the pattern of: algal biomass (diagonal lines), herbivore biomass comprising *Mitylus* larvae (vertical lines), primary carnivore biomass (diagonal hatching) and secondary carnivore biomass (lattice) as a function of time. All the biomass values are expressed in mgC/m$^3$ (mg organic Carbon/m$^3$).

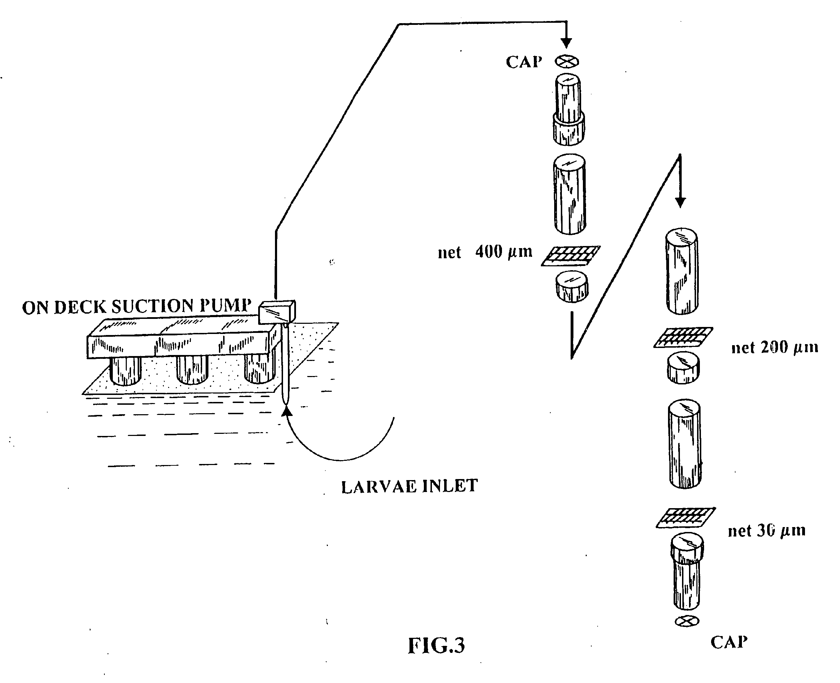

Figure 3 illustrates a possible filtering system for the real-time observation of *Mytilus veliger* larvae in water.

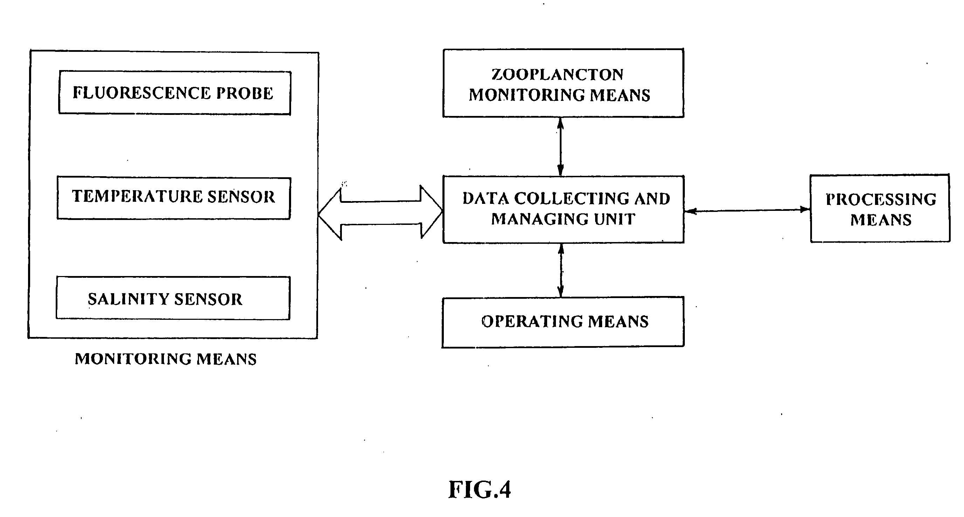

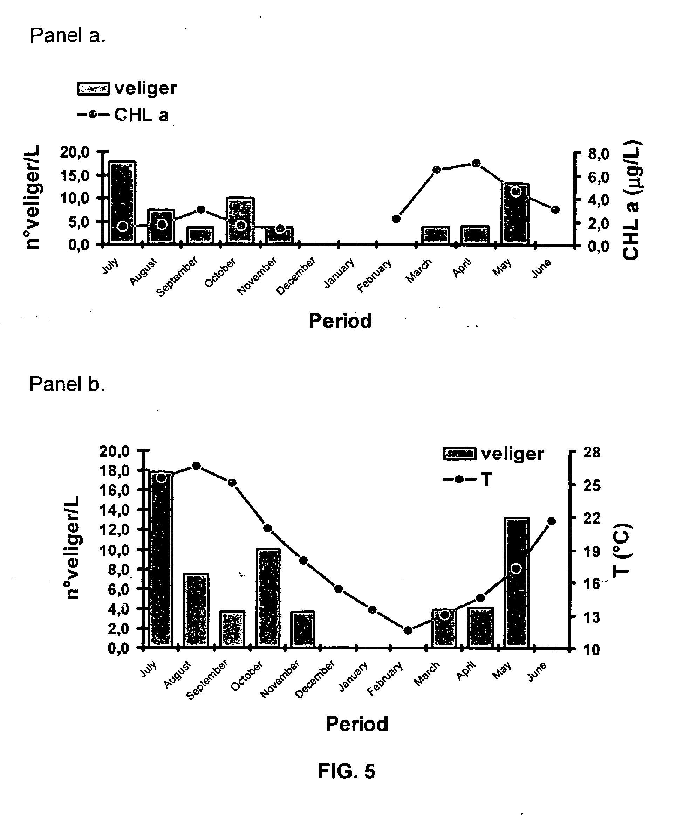

Figure 4 is a block diagram of a plant for preventing the colonization of submerged structure surfaces by aquatic filtering organisms according to the present invention.

In particular, a data collecting and managing unit supervises the general operation of the plant.

Monitoring means are provided to meter specific parameters in waters near the surfaces to be controlled, such as e.g. the pigment chlorophyll-A concentration, the water temperature and/or its salinity.

The metered data are collected in the collecting unit, which also collects data from further zooplankton monitoring means.

Processing means, linked to the data collecting unit, are advantageously provided for processing the collected data, in order to obtain the desired results. Said processing means comprises software procedures and programs, apt to implement specific steps of the method according to the present invention, in particular the steps of processing the metered data and of estimating the periods of maximum density of the filtering organisms.

Moreover, the data collecting and managing unit is apt to control operating means linked thereto, apt to automatically or semiautomatically carry out the water treatments required to avoid filtering organism proliferation.

A more detailed description of the specific components of the plant will be given hereinafter.

DETAILED DESCRIPTION OF THE INVENTION

*Aquatic filtering organisms.*

The aquatic filtering organisms according to the present invention are organisms possessing a zooplankton dispersion phase in water column, followed by a life-cycle stage competent for the colonization on a hard substrate, among which there are: bivalve and gastropod molluscs, *balanomorpha cirripedia crustacea,* serpulid *Polychaeta* annelids, encrusting bryozoans, *Porifera* and *Ascidiacea.* In a preferred embodiment of the present invention, said organisms belong to the bivalve class. In a more preferred embodiment of the present invention, said organisms belong to the *Mytilus* genus.

*Submerged surfaces*

The submerged surfaces according to the present invention may be surfaces of coastal industrial plants on shores of seas, lakes, basins or rivers. Said surfaces comprise all those conduits in which the colonization of the aquatic filtering organisms according to the present invention may create fouling problems. In an embodiment of the present invention said surfaces are heat exchangers of coastal industrial plants, water inlets, and intermediate basins and tanks of industrial and non-industrial plants, inside which the environmental conditions facilitate colonization by aquatic filtering organisms according to the present invention.

*Monitoring modes of the identification parameters of phytoplankton biomass values.*

According to the present invention, the monitoring of the identification parameters of phytoplankton biomass values may be carried out manually as well as automatically. In an embodiment of the present invention, said monitoring is carried out manually by sampling, more or less weekly, waters near to the surfaces of interest, and by subsequent chemico-analytical analyses of said waters to determine the phytoplankton component. According to a further embodiment of the present invention, said monitoring is carried out continuously using automatic monitoring means, like, e.g., a fluorescence probe. The fluorescence probe operates round-the-clock, analysing at 30 min intervals for a 30 sec period with a 1 Hz frequency (one analysis per second; according to the preferred setting of the probe). Said probe may also be programmed with different parameters known to a person skilled in the art. The monitoring means according to the present invention are all those known to a person skilled in the art apt to detect the abovementioned identification parameters of the phytoplankton biomass values.

*Identification parameters of the phytoplankton biomass values and monitoring thereof.*

The identification parameters of the phytoplankton biomass values according to the present invention are all those parameters known to a person skilled in the art. Said parameters may be: biomass assessment by calculating the average biocellular volumes following the count of the phytoplankton cells, of the concentration values of the pigment chlorophyll-A (Chl-A) and of others known to a person skilled in the art.

An identification parameter is given, e.g., by phytoplankton cell count and subsequent biomass assessment by calculating the average biocellular volumes (see methods).

In a preferred embodiment of the present invention, the identification parameters of the phytoplankton biomass values are obtained by metering the Chl-A concentration values. Said metering may be carried out according to methods known to a person skilled in the art like, e.g., chemico-analytical methods allowing a direct Chl-A metering in water samples, the use of a fluorescence probe or a combination of both. In fact, Chl-A concentration is directly proportional to the amount of phytoplankton cells in the water.

Chemico-analytical methods according to the present invention comprise, yet are not limited to, the spectrophotometric method, the fluorimetric method, the high-resolution liquid chromatography (HPLC), the fluorimetric method on suspensions in vivo (see experimental procedures).

Preferably, the metering is carried out by a biochemical analysis of the actual in-water Chl-A concentration for the conversion to quantitative estimates.

In a further embodiment of the present invention, said metering is carried out by fluorimetric method on suspensions *in vivo*, foreseeing no extraction procedures and carried out, e.g., by fluorimetric probe or by fluorescence probe (see experimental procedures).

In a preferred embodiment of the present invention, the fluorescence values provided by the probe may be checked, and optionally corrected, with values obtained by a biochemical analysis of the actual in-water Chl-A concentration. The collection of samples of the water of interest, concomitant to the metering carried out with the probe, allows to even more accurately extrapolate the time-pattern of the phytoplankton biomass.

In fact, besides from an accurate probe calibration by calibration curves with highly pure Chl-A standards, a periodic checking (at least monthly) of the conformity of this metering to the actual Chl-A concentration obtained by dosages on acetone extracts with the above methodologies allows an optimal sampling.

*Relationship between fluorescence values and Chl-A values*

The relationship between the fluorescence values and the Chl-A values is of linear type, according to an equation such as:

$$y = mx + q$$

where y= fluorescence (dependent variable)
x = Chl-A concentration
m = angular coefficient (slope)
q = offset

The fluorescence probes are calibrated for the m and q values by the manufacturer; hence, the unknown x is easily derivable from the equation.

*Zooplankton monitoring and* means *for carrying out said monitoring.*

Zooplankton monitoring according to the present invention may be carried out, in waters near the submerged surfaces of interest, at any time of the method object of the invention, besides at the time indicated at d. of the method as described. The monitoring carried out at c. of the method allows to use the biocides or the biocide mixtures of the present invention in an even more targeted manner.

Said monitoring should be carried out at intervals ranging from 24 to 72 hours. The checking of the presence or of the absence of zooplankton larvae subsequent to the sampling of the phytoplankton biomass values, to the determination of the time-pattern of said biomass and to the identification of a time instant at which said pattern exhibits a peak, allows to decide whether to carry on with d. e. and f. of the abovedescribed method or, in the absence of larvae, to avoid carrying on with the biocide treatment. Hence, said monitoring allows to carry out treatments with biocides solely when the former detects the presence of the larvae of the filtering organisms of said invention. The density growth periods of said organisms, as a function of the time-pattern of the phytoplankton biomass and of the peak exhibited by said pattern (i.e. the delay in the appearance of the zooplankton bloom with respect to the phytoplankton bloom and the developing periods of said organisms), depend on the organisms detected during the monitoring. Said organisms and also their life-cycle being known in literature, the calculation of the period of maximum density of said organisms may easily be carried out by a person skilled in the art. Moreover, said monitoring allows to use the most suitable biocide (or biocide mixture) according to the organisms detected thereby.

The method of the invention comprises (g.) optional steps of zooplankton control monitoring, subsequent to the (primary or secondary) treatments with biocides to test their effectiveness.

Such zooplankton monitoring step is preferably carried out monthly during the carrying out of the whole method, in order to provide a comprehensive knowledge of the species and of the number of individuals belonging thereto in the waters of interest, useful for ever more accurate forecasts of the zooplankton pattern at the site of interest.

The monitoring may be carried out according to:

a. Direct count of the larvae by sampling and filtering suitable water volumes to search for larvae;
b. Automatic count of the particles having size and morphology referable to the larvae to be quantified.

A plant according to the present invention further comprises means for carrying out a qualitative and quantitative monitoring of the zooplankton near the surfaces to be controlled.

Such monitoring means comprises a filtering device comprising an on-deck suction pump and a cylinder containing one or more filters.

The cylinder is subdivided into plural segments, each having at one of its ends a filtration net of the same kind of those commonly used for plankton sampling.

These nets are available in various mesh port sizes and are made with an accuracy sufficing for the correct operation of the filtering device.

According to the preferred embodiment of the plant according to the present invention, the meshes are selected according to the size of the organisms that are to be netted.

In this case the filter is subdivided into three segments, their nets having 400 $\mu$m, 200 $\mu$m and 30 $\mu$m ports, respectively.

The segments are sequentially arranged to form a single cylinder through which the marine water sucked in by the pump is flown.

At the end of the filtering, the filters yield the samples that should be fixed to be preserved until laboratory microscope analysis.

*Biocides, treatments with biocides and operating means of said treatments.*

The biocides according to the present invention may be any one biocide (or biocide mixture) known to a person skilled in the art suitable for the eradication of the aquatic filtering organisms of the present invention. Said biocides may be used in the standard concentrations, them also known to a person skilled in the art (as indicated e.g. in U.S. Pat. US 5.900.157 or in the manufacturer's specification). Said biocides or biocide mixtures comprise, yet are not limited to: peracetic acid, chlorine gas, sodium hypochlorite, calcium hypochlorite, chlorine dioxide, ozone, hydrogen peroxide, bromine, permanganates (e.g., potassium permanganate), persulfates (e.g., ammonium, alkali metals), perborates, quaternary ammonium salts, polyquaternary ammonium compounds, Endothal (Elf Atochem's EVAC®), metallic compounds (e.g. copper, zinc, potassium), Niclosamide (Bayer, salt of 2-amine-ethanol with 2,5-dichloro-4-nitro-salicylanilide), Bayluscide (Bayer, 2,5-dichloro-4-nitrosalicyl-anilide), bromine chloride (Stabrom 909, Albemarle), thiazoles and isothiazolines (Kathon WT, Rhom & Haas).

Any other biocide (o biocide mixture) apt to eradicate filtering organisms according to the present invention, used in suitable concentrations, may be useful for the purpouses of the present invention.

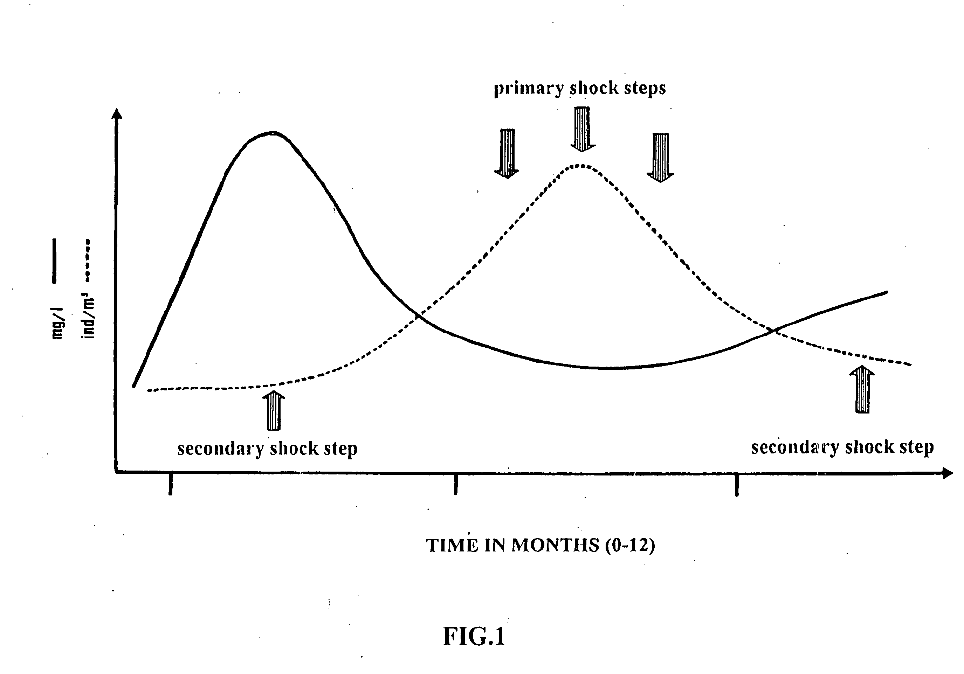

The treatments with said biocides, or biocide mixtures, of the waters near the submerged structures of interest, may be 'primary' or 'secondary'. As primary treatments, in the meaning of the present invention, there are defined those treatments (one or more) that are carried out at the period of maximum density of the aquatic filtering organisms of the present invention, calculated on the basis of the data obtained at a. b. c. and d. of the abovedescribed method. As secondary treatments, in the meaning of the present invention, there are defined those treatments (one or more) that may be carried out at periods other than that of density growth of said filtering organisms, like e.g. at periods of minimum density of said organisms or intermediate between the minimum densities and the maximum density (see Figure 1).

The primary treatments are carried out from 1 to 8, preferably from 1 to 4 times per maximum-density period, for a duration ranging from 12 to 240 hours, preferably for a duration ranging from 48 to 160 hours, even more preferably for a duration ranging from 48 to 100 hours. Said treatments are carried out with biocide (or biocide mixture) concentrations ranging from 300 to 0.5 ppm (µl/l). The biocide concentration used is higher for short-time treatments and lower for long-time treatments, e.g. it ranges from 0.5 to 10 ppm for treatments of about 240 hours and from 10 to 100 ppm for treatments of about 48 hours. Said treatments are preferably carried out from 1 to 4 times during the period of maximum density, for a duration ranging from 48 to 140 hours at a concentration ranging from 1.5 to 30 ppm.

In a further embodiment of the present invention, besides the primary treatments as described hereto, further secondary treatments are carried out at the periods of minimum density of said filtering organisms, from 1 to 8 times in each period of minimum density, for a duration ranging from 12 to 240 hours. The secondary treatments are carried out at biocide (or biocide mixture) concentrations lower with respect to the primary treatments, ranging from 80 to 0.5 ppm. Said treatments are carried out from 4 to 8 times per period of minimum density for a duration ranging from 48 to 240 hours at biocide (or biocide mixture) concentrations ranging from 0.5 to 20 ppm.

According to a preferred embodiment, a plant according to the present invention further comprises means apt to allow the carrying out of the water treatments with biocides, primary as well as secondary ones.

Preferably, such operating means comprises devices that, controlled by the plant managing unit, are apt to automatically carry out the required treatments, e.g. operating specific mechanisms like pumps, valves or anything else useful to this end.

A detailed specification of said devices and of their operation will be omitted, as the same lie within the capacity of a person skilled in the art.

Alternatively, such operating means may merely comprise acoustic and/or visual signalling devices informing an operator about the best time and modes for carrying out a certain treatment.

*Salinity and/or temperature value sampling and sampling* means.

The method of the present invention optionally foresees the monitoring of the water temperature and/or salinity, concomitantly to the monitoring carried out at a., for integrating or correcting the values obtained at a. and their use. The temperature values may be integrated to the phytoplankton biomass values for the calculation of the time of maximum zooplankton density. In fact, the temperature directly influences phytoplankton and zooplankton development determining environmental conditions more or less suitable for said development. The temperature-related environmental conditions optimal for phytoplankton and zooplankton development are known in literature. Therefore, the integration of the sampled temperature values to identification parameters of phytoplankton biomass values, e.g. Chl-A, allows a more accurate forecasting of the period of maximum density of the filtering organisms according to the present invention.

Concerning the monitoring of the salinity values, when the waters of interest are salty or brackish said values may be used to correct the phytoplankton biomass values to derive their pattern, and, consequently, to calculate the period of maximum density of the filtering organisms. In fact, in the case of salty waters, salinity values allow to indirectly assess the entity of a possible exogenous phytoplankton biomass contribution due to freshwater currents of continental origin nearby the submerged surfaces of interest. Said assessment allows to analyse the variation in the salinity values of the waters of interest, relating them to possible rises in phytoplankton biomass values. Hence, said relationship allows to consider the phytoplankton biomass values actually involved in the time-pattern of said biomass related to the areas of interest, discriminating them from sporadic concentration rises due to freshwater inletting.

Moreover, advantageously the temperature, salinity and phytoplankton biomass values may be integrated for the calculation of the period of maximum density of said filtering organisms.

The sampling of salinity and/or temperature values according to the present invention may be "manually' carried out weekly in the waters of interest, according to the phytoplankton sampling, and the related data obtained by simple laboratory procedures known to a person skilled in the art. According to the present invention, said values may be sampled also using electronic probes apt to meter one or both of said values.

Said samplings may be carried out by multiparameter probes, like, e.g., the CTD (Conductivity, Temperature, Depth) multiparameter probes. According to a preferred embodiment of the present invention, all data related to the pattern of the phytoplankton biomass and to the subsequent density values of filtering organisms detected over time, as well as all the meterings of fluorescence, temperature, salinity and of any other metered parameter, are stored in a historical archive.

Thus, such data may be used for statistical purpouses, during subsequent processing, intending to improve the accuracy of the estimates and of the forecasts carried out and with the final purpose of increasing the method effectiveness over time.

The following methods and examples are meant to provide a more detailed description of the invention, yet without limiting what is being claimed thereto.

**Experimental procedures**

Biomass assessment by average biocellular volume calculation

Water sampling is carried out by automatic closure Niskin-type bottles of an approximate volume of 10 litres, equipped with a basal stopcock allowing subsample collecting. Water subsamples destined to phytoplankton analysis are stored in dark glass bottles (250 ml volume) to prevent chlorophyll decay and fixed with prefiltered 0.8% formic aldehyde, neutralised and stabilised with hexamethylene tetramine at pH 7.0 - 7.2.

Then, the samples are laboratory analysed following the Utermöhl method (Utermöhl H., 1958. Zur Vervollkommnung der quantitativen Phytoplankton Methodik. *Mitt. Int. Verein. Theor. Angew. Limnol.,* 9:1-38). The sample is manually agitated for a prolonged time to resuspend the phytoplankton cells settled on the bottle bottom, taking care to adopt slow and gentle motions in order not to injure the organisms.

The procedure foresees the collecting of a variable-volume water aliquot, depending on the phytoplankton density forecast from the features of the sampling site examined (e.g. distance from shore and depth). This aliquot is left to settle in suitable known-volume glass cylinders (10 - 100 ml), resting on known-radius circular-section settling chambers. The settling time varies according to the volume to be analysed and to the cylinder height: a waiting time of about 3 -5 hours per cm of cylinder height is advisable. At the end of the settling, the cylinder is separated from the settling chamber by sliding on a suitable support, the sample is covered with a slide coverslip, avoiding bubble formation and settled material dispersion. Observation is carried out by phase-contrast inverted optical microscope with 200x and 400x magnification.

Phytoplankton cell count is conventionally carried out on transepts or on random visual areas, called fields. A transept corresponds to an area having a width equal to the diameter of the settling chamber and a height equal to the field of view of the lens used. The random visual fields are obtained by dividing the settling chamber bottom into a central circle and 9 circular concentric crowns, all having the same area. By intersecting these areas with 5 diameters, crossed at equal angles thereamong, 100 circular sectors (or segments) are obtained. Hence, for the count a certain number of fields (30-60) are observed, randomly drawn among the 100 segments obtained beforehand. The count obtained by the transept method tends to produce an overestimation in the central area of the chamber, therefore it is preferable to adopt the random field method.

Then the phytoplankton cell count values are reported to the number of individuals per ml (= cells/ml).

Instead, the estimate of the biomass of the entire phytoplankton community is obtained by calculating the average biocellular volumes. In fact, a metering of each single cell by a micrometric eyepiece is carried out in parallel with the cell count. Biovolume is estimated by geometric formulas, reporting each phytoplankton species to an analogous three-dimensional geometric shape. The cellular plasma volume thus estimated is used for calculating the phytoplankton biomass according to Strathmann formula (1967):

for the diatoms:

$$\log_{10} C = 0.758 \ (\log_{10} V) - 0.422$$

for the remaining phytoplankton species:

$$\log_{10} C = 0.866 \ (\log_{10} V) - 0.460$$

where:

V = specific average cellular volume
C = $\mu$g organic carbon/cell

Therefore, the phytoplankton biomass values are expressed in $\mu$g C/l.

Spectrophotometric method

In order to avail oneself of a pigment amount sufficing for the analysis, it is necessary to concentrate phytoplankton cells, present in the water sample (from 1 to 5 litres collected with Niskin-type bottles and prefiltered with a 200

μm net), by filtration on GF/F Whatman glass fibre filters using a <200 mm Hg suction pressure. The filters are stored at -20° C, in a sealed test pipe and in a known volume of neutralised acetone, for a ≤30-day period.

Chlorophyll A is cold-extracted from phytoplankton cells consequently to filter grinding and homogenising (by homogeniser or manual action with mortar and pestle) in a 90% acetone mixture. The test tubes, containing 10 ml of 90% acetone and the homogenate filter, are kept at 5°C in the dark for about 24 hours, then a 3000-4000 rpm centrifugation is carried out for 10 min.

Then, the photosynthetic pigment concentration is estimated by spectrophotometric method.

The spectrophotometer should possess the following technical requirements: interference grid and 1-2 nm bandwidth, cells having a 50-100 mm optical path and a maximum volume of 7 ml. After centrifugation, the supernatant is collected and poured in the spectrophotometer cuvette. The readings are performed at 665 nm and at 750 nm wavelengths (the reading at 750 nm evaluates the sample turbidity; the absorbance value should be lower than 0.010, otherwise a further centrifugation or another filtration of the sample with a 0.2 μm filter will be required).

Subsequently, the analytic procedure foresees the acidification of the sample upon addition of 50 μl of HCl 1N per 5 ml of extract directly in the spectrophotometer cuvette. After having agitated the sample and waited about 1 min, the readings are repeated at the same wavelengths. Then, the net absorbances of the extract, pre- and post-acidification ($[A(665_0)]$ and $[A(665_\alpha)]$ respectively), are determined according to the following formula:

$$A(665_\alpha) = [A(s, 665_\alpha) - A(b, 665)] - [A(s, 750_\alpha) - A(b, 750)]$$

where:

A(b, 665)= blank absorbance at 665 nm
A(b, 750)= blank absorbance at 750 nm
$A(s, 665_\alpha)$ = sample absorbance at 665 nm, pre-($\alpha$=0) and post-acidification ($\alpha$=a)
$A(s, 750_\alpha)$= sample absorbance at 750 nm, pre ($\alpha$=0) and post-acidification ($\alpha$=a)
Chl-A and pheopigment concentrations are calculated applying the following formulas:

$$Chl-A(\mu g/l) = 26.7 * [A(665_0) - A(665_a)] * v * 10^3 / (CO*V)$$

$$Pheo(\mu g/l) = 26.7 * [1.7 * A(665_a) A(665_0)] * v * 10^3 / (CO*V)$$

where:

CO= optical path of the cell (cm)
v= extract volume (ml)
V= filtered sample volume (ml)

Fluorimetric method

For the estimation of the Chlorophyll-A, the present method is based on the metering of the fluorescence of the acetone extract pre- and post-HCl acidification, thereby metering the photosynthetically active (chlorophyll A) and inactive (pheopigments) fraction of the pigments in the sample.

This method is particularly suitable for concentration values of pigments in water column not higher than 1 μg/l, as above these values the fluorescence/concentration relationship is not held linear anymore.

The spectrofluorimeter is selected on the excitation and emission bands proper of chlorophyll-A: EXC=430 nm and EMISS=665 nm. After having reset the instrument with a blank (90% acetone), the extract fluorescence ($F_0$) is metered. Subsequently, 2 drops of HCl 1N are added with a Pasteur pipette and, after about 1 min, the post-acidification fluorescence value ($F_a$) is metered.

To calculate the concentration of the chlorophyll-A and of the pheopigments, the following formulas are employed:

$$mg\ Chl-A\ l^{-1} = R/(R-1)*(F_0-F_a)*C*(v/V)$$

$$mg\ Pheo\ l^{-1} = R/(R-1)*((R*F_a)-F_0)*C*(v/V)$$

where:

$F_0$= pre-acidification fluorescence
$F_a$= post-acidification fluorescence
C= mean factor $C_a$ / Fo $_{st.}$ calculated for the standards
$C_a$= known concentration of each individual standard
$F_0$ st.= fluorescence of the standard relative to the pre-acidification concentration $C_a$
R = mean factor $F_0$ st. / $F_{a\ st.}$ calculated for the standards
$F_{a\ st.}$= fluorescence of the standard relative to the post-acidification concentration $C_a$
V = acetone extract volume (ml)
V = filtered sample volume (1)

High-resolution chromatographic method(HPLC)

The analytical procedure foresees the extraction of the pigments with acetone and methanol; the extracts are then concentrated and separated in a 30-cm column (Partisil-10 with 4600 theoretical plates) by means of a mobile phase of petrol ether, acetone, dimethyl sulfoxide and diethylamine, dosed with a 2 $cm^3$/min flow at a 14-atm pressure.
Spectrophotometer at a 440 nm wavelength.
The method, highly sensitive, allows the detection of 80 ng/l Chl-A concentrations.

Fluorimetric method on *in vivo* suspensions

This method is mainly based on fluorescence metering in the red band (emission spectral maximum: $680\pm2$ nm) emitted by the Chlorophyll A and by the accessory pigments consequently to blue-light excitation (emission spectral maximum: $432\pm4$ nm). The water sample is pumped through a quartz pipe mounted inside the fluorimetric probe along the longitudinal axis. The pigment chlorophyll, present in the water-suspended phytoplankton cells, excited by an external light source (blue light) absorbs light in a certain region of the visible spectrum, remitting a light fraction as fluorescence at a higher wavelength (red light). To this end, LEDs emit light in the blue band (excitation), whereas a detector, equipped with a silicon photodiode, located at 90° with respect to the axis of the LEDs, meters the fluorescence emitted by the water volume under exam.
Then, the fluorescence values are converted in Chl-A concentration (in absolute value) directly from the instrument, gauged with pure chlorophyll standards directly by the manufacturer.
commercially available allows to estimate Chl-A over a wide range of concentrations, of from $0.01*10^{-3}$ to 0.01 mg/l.
The use in situ of fluorimeters associated to CTD multiparameter probes allows a real-time and continuous detection of the chlorophyll-A concentration in water column, further allowing to highlight both its vertical and its horizontal distribution.

**Example I:**

Use of Peracetic acid as biocide for the bivalve mussel *Mytilus galloprovincialis*

Peracetic acid, also known as peroxyacetic acid ($CH_3CO_3H$), is a weak acid commonly commercialised as antibacterial agent for water and food industry disinfection. The commercial product is an equilibrium mixture in aqueous solution of peracetic acid, acetic acid, hydrogen peroxide and stabilisers (phosphates, phosphonic acids, dipicolinic acids).
The reaction at balance is the following:

$$CH_3CO_3H + H_2O \leftrightarrow CH_3CO_2H + H_2O_2$$

The decomposition of the product generates methane, carbon dioxide, oxygen and water, all ecocompatible products entailing an extremely low environmental impact.

Commercial peracetic acid solution is available in concentrations ranging from about 1 to about 40 wt%, though diluted solutions of 1-15wt% peracetic acid are commonly used, since at higher concentrations it exhibits a strong corrosive action.

In the case of higher Metazoa, the product was effectively tested on the bivalve mollusc *Dreissena polymorpha* (zebra mussel), a freshwater species infesting many lakes and rivers of the United States and of Canada. This organism is deemed to be the main culprit of the damaging to the conduction, filtering and cooling (CWS) systems in industrial plants having heat exchangers, equipped with water inlets directly from the water body.

Several other reagents may be used in combination with the peracetic acid in order to attain a synergic effect, with the entailed reduction of the treatment times and costs. These reagents comprise other abovedescribed biocides (molluscicides), oxidising and not oxidising, as well as mere additives capable of increasing the oxidising activity of the peracetic acid.

In some cases the use of surfactants (anionic, cationic or nonionic, among which anionic sulfates and sulfonates) in combination with the peracetic acid may prove convenient in order to facilitate biocide dispersion, above all in the presence of foam preventing contact between the biocide and the organism to be eradicated.

Tested products

In the case at issue, different concentrations of peracetic acid (PAA) at a nominal concentration of 150g/L (15 wt%) produced by Ausimont were tested.

The biocidal action of different concentrations of bromine chloride (trade name: Stabrom) at a nominal concentration of 105-115g/L (10.5-11.5 wt%) produced by Albemarle and of mixtures of the two products (PAA+Stabrom) in different ratios, was also tested.

Laboratory procedures

*Mytilus galloprovincialis* specimens were sampled in the sea area in front of the Conero and left to acclimate in an aquarium for a 48-hour time.

The specimens were subdivided into two main biometric classes: 5-10 mm and >10 mm. The subdivision into size classes helped to assess the treatment effectiveness on organisms at a different development stage, since the resistance to the biocide is directly related to size.

The mussels are accomodated inside of suitable plastics material tanks equipped with a continuous aeration system. Inside each tank there are 10 mussels for each of the two size classes, whose reactivity and vitality is assessed immediately prior to the experiment. The solutions having different biocide concentrations are prepared using the water in the aquarium in order to avoid stresses due to a sudden temperature change. The temperature of the water in the aquarium ranges from 19 to 20°C. The mortality tests for each biocide concentration are conducted in triplicate; a set of three tanks is not subjected to any treatment (control blank) in order to assess whether the observed mortality be due exclusively to the action of the biocide or to the experimental conditions.

The mussels subjected to the treatment are observed over time, at 2-3-hour intervals, to their decease. Their behaviour is noted down, with the aim of determining the time in which the toxic agent proves effective in causing sublethal reactions. In particular, three different ethological parameters were considered, employed as stress bioindicators:

1) Visible mantle edges: the organism is vital and effecting regular breathing and feeding processes. Under unfavourable environmental conditions, mussels tightly clamp valves and discontinue any exchange with the external environment. In the case of a prolonged exposure to the biocide, a physiological response occurs as well: due to the impossibility of effecting gas exchanges with the outside, mussels are forced to set up an anaerobic metabolism that entails the decalcification of the freshly-laid shell portions with the consequent slowing down of the growth rate.

2) Foot motion: The organism is actively searching for an optimal position, and it rapidly reacts by retracting to foot inside the valves when mechanically stimulated from the outside. Under prohibitive environmental conditions the valve closure prevents the coming out of the foot.

3) Verticalization (adhesion to the substrate): the byssus protein threads, secreted at the foot zone level, allow an effective anchoring to the substrate with no energy expenditure. Under environmental stress conditions, these threads are not secreted, or are secreted in a number so limited as to ensure only a weak adhesion to the substrate.

The organisms are considered dead when the valves remain open also after repeated mechanic stimulations of the mantle.

The (biocide - marine water) solution was renewed every 24 hours, as required in the case of ecotoxicological experiments having a constant concentration of biocide.

The biocide was dosed using a micropipette and the solution prepared using a graduated glass cylinder.

**Example II:**

Definition of the sizes of the larvae entering the plant

In order to proceed with the manual count as well as with the automatic count (operationally easier and methodologically safer as it provides a greater number of information over time) accurate information on *Mytilus* larvae size were used. In early life-cycle stages, the *Mytilus* specimens undergo a series of larval stages of increasing size (see Table 1).

**Tab. 1** *Mytilus* larval stages and sizes

| Common definitions | Stage | Size | Duration | Behaviour |
|---|---|---|---|---|
| Larva | Trochophore | | 1 dd | |
| "D" larva or prodissoconch | Veliger | 300 $\mu$m (max) | | End of planktonic life |
| Post-larva | Pediveliger | | Up to 7 wks | Metamorphically competent; however, metamorphosis may be delayed until optimal substrate is found |
| | | 225-470 $\mu$m | - | Certainly attributable to the *Mytilus* genus |
| | | 250 $\mu$m- 2 mm | - | Under static conditions, crawling and forming aggregates; not selecting a specific substrate and remaining at the original colonization site. |
| | | 225-470$\mu$m | - | Under turbulent conditions, attaching to a variety of substrates - preferentially to byssus threads and to *Ceramium* red algae thalli. |
| | | 250 $\mu$m- 2 - mm | - | Attaching to filamentous algae. |
| Post-larva | Early plantigrades | - | 1 mth | Detaching again, drifting in the current; |
| | Late plantigrades | 11 mm | - | Final colonization in a *mussel bed* |

The meshes of the nets belonging to the filtering system were selected according to the sizes of the different larval types *(Trochophora, Veliger, Pediveliger).* In fact, the larval forms of *Mytilus,* when exposed to a light of suitable wavelength at the light microscope, are highlighted by the appearance of an X allowing their immediate identification. In order to carry out the automatic count, also a particle counter (Coulter Counter) may be applied to the CTD for counting the larvae *in situ.* The apparatus is capable of emitting the desired light, and hence, set on the recognition of this detail, it allows to continuously count the larvae directly (and in situ).

**Claims**

1. A method for controlling and/or preventing the colonization of submerged structure surfaces by aquatic filtering organisms, comprising the following steps:

   a. monitoring the parameters identifying phytoplankton biomass values in waters near said surfaces;

   b. determining from said values the time-pattern of the phytoplankton biomass and identifying a time instant at which said pattern exhibits a peak, and;

   c. monitoring zooplankton in said time instant and assessing the presence or the absence of zooplankton-stage larvae of said filtering organisms near said surfaces and, in the case of presence of said larvae;

   d. calculating as a function of said time instant a period of maximum density of said filtering organisms and, optionally, the periods of minimum density of said filtering organisms;

   e. subjecting said waters to one or more primary treatments with a biocide or a biocide mixture during said period of maximum density, and, optionally,

   f. subjecting said waters to one or more secondary treatments with a biocide or a biocide mixture during said periods of minimum density;

   g. carrying out further steps of monitoring the zooplankton in said waters.

2. The method according to claim 1, wherein the monitoring at a. may be carried out by a manual sampling, by an automatic monitoring, or by both.

3. The method according to claims 1 or 2, wherein the monitoring at a. comprises metering of Chlorophyll-A concentration values.

4. The method according to claim 3, wherein said monitoring comprises a step of converting the Chlorophyll-A concentration values into phytoplankton biomass values.

5. The method according to claims 3 or 4, wherein said meterings of Chlorophyll-A concentration are carried out by a fluorescence metering.

6. The method according to any one of the claims 1 to 5, wherein said waters are marine or brackish, further comprising a step of monitoring the salinity values of said waters concomitantly to the monitoring at a. and a correction of the values identified at a. on the basis of the monitored salinity values.

7. The method according to any one of the claims 1 to 6, wherein said primary treatments are carried out from 1 to 8 times, for a duration ranging from 12 to 240 hours, at a biocide, or biocide mixture, concentration ranging from 300 to 0.5 ppm.

8. The method according to any one of the claims 1 to 7, wherein said secondary treatments are carried out from 1 to 8 times, for a duration ranging from 12 to 240 hours at a biocide, or biocide mixture, concentration ranging from 80 to 0.5 ppm.

9. The method according to any one of the claims 1 to 8, wherein said filtering organisms are at the benthos stage during the primary treatments with biocides.

10. A plant for controlling the colonization of submerged structure surfaces by aquatic filtering organisms, comprising:

    a. means for monitoring parameters identifying phytoplankton biomass values in the waters near said surfaces, said means being selected from the group comprising means for spectrophotometric analysis, means for fluorimetric analysis, means for HPLC analysis and means for fluorimetric analysis on *in vivo* suspensions;

    b. means for processing said values;

    c. means for qualitatively and quantitatively monitoring the zooplankton near said surfaces; with filtering devices

    d. units for integrating the values processed by the means at a to the data detected by the means at c;

    e. operating means apt to carry out treatments of said waters with biocides.

11. The plant according to claim 10 wherein the monitoring means at a. comprises a probe apt to monitor chlorophyll-A concentration values.

**12.** The plant according to claim 11, wherein

**13.** The plant according to any one of the claims 10 to 11, wherein the monitoring means at a. further comprises a probe apt to detect water salinity.

**14.** The plant according to any one of the claims 10 to 13, wherein the means at c. comprises a water filtering device apt to monitor in real-time the presence, the type and the density of the zooplankton.

**15.** The plant according to claim 14, wherein said filtering device comprises a suction pump.

**16.** The plant according to claim 14 or 15 wherein said filtering device comprises a filtering cylinder subdivided into two or more sequentially arranged segments.

**17.** The plant according to claim 16, wherein each of said segments contains at least one filtration net located at one of its ends.

**18.** The plant according to claim 17, wherein each of those filtration nets has a respective port of sizes apt to let through organisms of predefined dimensions.

**19.** The plant according to any one of the claims 10 to 18, wherein said collecting and processing unit is apt to automatically receive said sampled values.

**20.** The plant according to any one of the claims 10 to 19, wherein the processing means at b. are apt to process the monitored values to obtain corresponding phytoplankton biomass values and to determine the time-pattern of said biomass.

**21.** The plant according to claim 20, wherein said processing means are apt to identify a time instant at which said pattern has a maximum or a minimum peak.

**22.** The plant according to claim 21, wherein the further processing means of claim 11 are apt to extrapolate, on the basis of the time instant in which said pattern has a maximum or a minimum peak and on the basis of the data obtained by the monitoring means at c., periods of maximum or of minimum density of said filtering organisms.

**23.** The plant according to any one of the claims 10 to 22, wherein said processing means comprise one or more elaborating computer programs.

**24.** Computer program product, comprising program code stored on a storage medium, the program being apt to cooperate with a 23 plant according to any one of the claims 10 to 23, such that a method according to one of the claims 1 to 9 is carried out.

**Patentansprüche**

**1.** Ein Verfahren zur Kontrolle und/oder Verhinderung der Kolonisierung getauchter, strukturierter Oberflächen durch aquatische, filtrierende Organismen, das die folgenden Schritte umfasst:

a. das Überwachen der Parameter, die Biomassewerte von Phytoplankton in Gewässern nahe der genannten Oberflächen identifizieren,

b. das Bestimmen des zeitlichen Musters der Phytoplanktonbiomasse aus den Werten und das Identifizieren eines Zeitpunktes, zu dem das Muster einen Spitzenwert aufzeigt, und

c. das Überwachen von Zooplankton zu diesem Zeitpunkt und die Bestimmung des Vorhandenseins oder der Abwesenheit von Zooplankton von den filtrierenden Organismen nahe der Oberflächen im Larvenstadium und, in dem Fall des Vorhandenseins der Larven,

d. die Berechnung eines Zeitraums maximaler Dichte der filtrierenden Organismen als eine Funktion des Zeitpunktes und optional der Zeiträume der minimalen Dichte der filtrierenden Organismen,

e. die Behandlung der Gewässer mit einer oder mehreren primären Behandlungen mit einem Biozid oder mit einer Biozidmischung während des Zeitraums der maximalen Dichte und optional

f. die Behandlung der Gewässer mit einer oder mehreren sekundären Behandlungen mit einem Biozid oder einer Biozidmischung während der Zeiträume der minimalen Dichte,

g. das Durchführen weiterer Schritte der Überwachung des Zooplanktons in den Gewässern.

**2.** Das Verfahren gemäß Anspruch 1, wobei die Überwachung in Schritt a. durch eine manuelle Probennahme, durch eine automatische Überwachung oder beides, durchgeführt werden kann.

**3.** Das Verfahren gemäß Anspruch 1 oder 2, wobei die Überwachung in Schritt a. das Messen der Konzentrationswerte von Chlorophyll A umfasst.

**4.** Das Verfahren gemäß Anspruch 3, wobei die Überwachung einen Schritt der Umrechnung der Konzentrationswerte von Chlorophyll A in Werte der Biomasse von Phytoplankton umfasst.

**5.** Das Verfahren gemäß einem der Ansprüche 3 oder 4, wobei das Messen der Konzentration von Chlorophyll A durch eine Fluoreszenzmessung durchgeführt wird.

**6.** Das Verfahren gemäß einem der Ansprüche 1 bis 5, wobei die Gewässer Meeres-oder Brackwasser sind, das zusätzlich einen Schritt der gleichzeitigen Überwachung der Salzwerte der Gewässer zusammen mit der Beobachtung von Schritt A und eine Korrektur der Werte, die in Schritt a. identifiziert werden, auf der Basis der überwachten Salzwerte umfasst.

**7.** Das Verfahren gemäß einem der Ansprüche 1 bis 6, wobei die primären Behandlungen 1 bis 8 Mal für eine Dauer im Bereich von 12 bis 240 Stunden mit einer Biozid- oder Biozidmischungskonzentration im Bereich von 300 bis 0,5 ppm durchgeführt werden.

**8.** Das Verfahren gemäß einem der Ansprüche 1 bis 7, wobei die sekundären Behandlungen 1 bis 8 Mal für eine Dauer im Bereich von 12 bis 240 Stunden mit einer Biozid- oder Biozidmischungskonzentration im Bereich von 80 bis 0,5 ppm durchgeführt werden.

**9.** Das Verfahren gemäß einem der Ansprüche 1 bis 8, wobei die filtrierenden Organismen in dem Benthosstadium während der primären Behandlungen mit Bioziden vorliegen.

**10.** Eine Vorrichtung zur Kontrolle der Kolonisierung von getauchten, strukturierten Oberflächen durch aquatische, filtrierende Organismen, umfassend:

a. Mittel zur Überwachung von Parametern, die Biomassewerte von Phytoplankton in den Gewässern nahe der Oberflächen identifizieren, wobei die Mittel aus der Gruppe ausgewählt sind, die Mittel zur spektrofotometrischen Analyse, Mittel zur fluorimetrischen Analyse, Mittel zur HPLC-Analyse und Mittel zur fluorimetrischen Analyse von *in vivo*-Suspensionen umfasst,

b. Mittel zur Verarbeitung der Werte,

c. Mittel zur qualitativen und quantitativen Überwachung des Zooplanktons nahe der Oberflächen mit Filtervorrichtungen,

d. Elemente zur Integration der Werte, die durch die Mittel in Punkt a. verarbeitet werden, zu den Daten, die durch die Mittel in Punkt c. nachgewiesen werden,

e. Betriebsmittel, die zur Durchführung von Behandlungen der Gewässer mit Bioziden geeignet sind.

**11.** Die Vorrichtung gemäß Anspruch 10, wobei das Mittel zur Überwachung in Punkt a. eine Sonde umfasst, die geeignet ist, die Konzentrationswerte von Chlorophyll-A zu überwachen.

**12.** Die Vorrichtung gemäß Anspruch 11, wobei die Sonde eine Fluoreszenzsonde ist.

**13.** Die Vorrichtung gemäß einem der Ansprüche 10 bis 11, wobei das Mittel zur Überwachung in Punkt a. zusätzlich eine Sonde umfasst, die geeignet ist, den Salzgehalt von Wasser zu bestimmen.

**14.** Die Vorrichtung gemäß einem der Ansprüche 10 bis 13, wobei das Mittel in Punkt c. eine wasserfiltrierende Vorrichtung umfasst, die geeignet ist, in Echtzeit das Vorhandensein, die Art und die Dichte des Zooplanktons zu überwachen.

**15.** Die Vorrichtung gemäß Anspruch 14, wobei die Filtervorrichtung eine Saugpumpe umfasst.

**16.** Die Vorrichtung gemäß Anspruch 14 oder 15, wobei die Filtervorrichtung einen filtrierenden Zylinder umfasst, der in zwei oder mehr nacheinander angeordnete Segmente unterteilt ist.

**17.** Die Vorrichtung gemäß Anspruch 16, wobei jedes der Segmente wenigstens ein Filternetz enthält, das an dessen Enden lokalisiert ist.

**18.** Die Vorrichtung gemäß Anspruch 17, wobei jedes dieser Filternetze einen jeweiligen Aufnahmebereich mit Größen aufweist, die geeignet sind, Organismen mit vorbestimmten Dimensionen durchzulassen.

**19.** Die Vorrichtung gemäß einem der Ansprüche 10 bis 18, wobei die sammelnde und verarbeitende Einheit geeignet ist, automatisch die Probenwerte aufzunehmen.

**20.** Die Vorrichtung gemäß einem der Ansprüche 10 bis 19, wobei das verarbeitende Mittel in Punkt b. geeignet ist, die überwachten Werte zu verarbeiten, um korrespondierende Biomassewerte des Phytoplanktons zu erhalten und um das Zeitmuster der Biomasse zu bestimmen.

**21.** Die Vorrichtung gemäß Anspruch 20, wobei das verarbeitende Mittel geeignet ist, einen Zeitpunkt zu bestimmen, zu dem das Muster einen maximalen oder einen minimalen Spitzenwert aufzeigt.

**22.** Die Vorrichtung gemäß Anspruch 21, wobei die zusätzlichen verarbeitenden Mittel von Anspruch 11 geeignet sind, auf der Basis des Zeitpunktes, zu dem das Muster einen maximalen oder einen minimalen Spitzewert aufweist, zu extrapolieren sowie auf der Basis der Daten, die durch das Überwachungsmittel in Punkt c. erhalten werden, Zeiträume der maximalen oder der minimalen Dichte der filtrierenden Orgsanismen zu bestimmen.

**23.** Die Vorrichtung gemäß einem der Ansprüche 10 bis 22, wobei das verarbeitende Mittel ein oder mehrere ausführende Computerprogramme umfasst.

**24.** Computerprogrammprodukt, umfassend einen Programmiercode, der auf einem Speichermedium gespeichert ist, wobei das Programm geeignet ist, mit einer Vorrichtung gemäß einem der Ansprüche 10 bis 23 zu kooperieren, so dass ein Verfahren gemäß einem der Ansprüche 1 bis 9 durchgeführt wird.


**Revendications**

**1.** Procédé de régulation et/ou de prévention de la colonisation de surfaces de structures immergées par des organismes filtrants aquatiques, comprenant les étapes suivantes :

a. le contrôle des paramètres identifiant les valeurs de la biomasse de phytoplancton dans des eaux proches des dites surfaces ;
b. la détermination à partir des dites valeurs le réseau temps de la biomasse du phytoplancton et l'identification d'un instant dans le temps auquel ledit réseau présente un pic, et ;
c. le contrôle du zooplancton audit instant dans le temps et l'évaluation de la présence ou de l'absence de larves à l'état de zooplancton desdits organismes filtrants proches des dites surfaces et, dans le cas de la présence des dites larves ;
d. le calcul en fonction dudit instant dans le temps d'une période de densité maximale desdits organismes filtrants et, facultativement, des périodes de densité minimales desdits organismes filtrants ;
e. l'application aux dites eaux d'un ou de plusieurs traitements primaires avec un biocide ou un mélange de biocides au cours de ladite période de densité maximale, et, facultativement,
f. l'application aux dites eaux d'un ou de plusieurs traitements secondaires avec un biocide ou un mélange de biocides au cours des dites périodes de densité minimale ;
g. la réalisation d'étapes supplémentaires de contrôle du zooplancton dans lesdites eaux.

**2.** Procédé selon la revendication 1, dans lequel le contrôle à l'étape a. peut être réalisé par un échantillonnage manuel, par un contrôle automatique, ou par ces deux procédés.

**3.** Procédé selon la revendication 1 ou la revendication 2, dans lequel le contrôle à l'étape a. comprend la mesure des valeurs de concentration de Chlorophylle-A.

**4.** Procédé selon la revendication 3, dans lequel ledit contrôle comprend une étape de conversion des valeurs de concentration de Chlorophylle-A en des valeurs de biomasse du phytoplancton.

**5.** Procédé selon la revendication 3 ou la revendication 4, dans lequel lesdites mesures de concentration de Chlorophylle-A sont réalisées au moyen d'un fluorescimètre.

**6.** Procédé selon l'une quelconque des revendications 1 à 5, dans lequel lesdites eaux sont des eaux de mer ou des eaux saumâtres, comprenant en outre une étape de contrôle des valeurs de salinité des dites eaux conjointement avec le contrôle à l'étape a. et une correction des valeurs identifiées à l'étape a. en fonction des valeurs de salinité contrôlées.

**7.** Procédé selon l'une quelconque des revendications 1 à 6, dans lequel lesdits traitements primaires sont réalisés de 1 à 8 fois, pour une durée allant de 12 à 240 heures, à une concentration de biocide ou de mélange de biocide allant de 300 à 0,5 ppm.

**8.** Procédé selon l'une quelconque des revendications 1 à 7, dans lequel lesdits traitements secondaires sont réalisés de 1 à 8 fois, pour une durée allant de 12 à 240 heures à une concentration de biocide ou de mélange de biocides allant de 80 à 0,5 ppm.

**9.** Procédé selon l'une quelconque des revendications 1 à 8, dans lequel lesdits organismes filtrants sont à l'état benthique au cours des traitements primaires avec des biocides.

**10.** Equipement pour réguler la colonisation de surfaces de structures immergées par des organismes filtrants aquatiques, comprenant :

a. des moyens de contrôle de paramètres d'identification des valeurs de la biomasse du phytoplancton dans les eaux proches des dites surfaces, lesdits moyens étant choisis dans le groupe comprenant des moyens d'analyse colorimétrique, des moyens d'analyse fluorimétrique, des moyens d'analyse de chromatographie liquide à haute performance et des moyens d'analyse fluorimétrique sur des suspensions *in vivo;*
b. des moyens de traitement des dites valeurs ;
c. des moyens de contrôle qualitatif et quantitatif du zooplancton proche des dites surfaces au moyen des dispositifs filtrants ;
d. des unités d'intégration des valeurs traitées par les moyens à l'étape a. aux données détectées par les moyens à l'étape c. ;
e. des moyens de fonctionnement capables de réaliser des traitements des dites eaux avec des biocides.

**11.** Equipement selon la revendication 10, dans lequel les moyens de contrôle à l'étape a. comprennent une sonde capable de contrôler les valeurs de concentration de chlorophylle-A.

**12.** Equipement selon la revendication 11, dans lequel ladite sonde est une sonde à fluorescence.

**13.** Equipement selon l'une quelconque des revendications 10 à 11, dans lequel les moyens de contrôle à l'étape a. comprennent en outre une sonde capable de détecter la salinité des eaux.

**14.** Equipement selon l'une quelconque des revendications 10 à 13, dans lequel les moyens à l'étape c. comprennent un dispositif de filtration d'eau capable de contrôler en temps réel la présence, le type et la densité du zooplancton.

**15.** Equipement selon la revendication 14, dans lequel ledit dispositif de filtration comprend une pompe aspirante.

**16.** Equipement selon la revendication 14 ou la revendication 15, dans lequel ledit dispositif de filtration comprend un cylindre de filtration subdivisé en deux ou plus segments disposés séquentiellement.

**17.** Equipement selon la revendication 16, dans lequel chacun desdits segments contient au moins un filet de filtration à une des ses extrémités.

**18.** Equipement selon la revendication 17, dans lequel chacun desdits filets de filtration présente un canal correspondant dont les dimensions permettent le passage d'organismes de dimensions prédéfinies.

**19.** Equipement selon l'une quelconque des revendications 10 à 18, dans lequel ladite unité de réception et de traitement est capable de recevoir automatiquement lesdites valeurs échantillonnées.

**20.** Equipement selon l'une quelconque des revendications 10 à 19, dans lequel les moyens de traitement à l'étape b. sont capables de traiter les valeurs contrôlées pour obtenir des valeurs de biomasse du phytoplancton correspondantes et pour déterminer le réseau temps de ladite biomasse.

**21.** Equipement selon la revendication 20, dans lequel les moyens de traitement sont capables d'identifier un instant dans le temps auquel ledit réseau présente un pic maximum ou minimum.

**22.** Equipement selon la revendication 21, dans lequel les moyens de traitement supplémentaires selon la revendication 11 sont capables d'extrapoler en fonction de l'instant dans le temps auquel ledit réseau présente un pic maximum ou minimum et en fonction des données obtenues par les moyens de contrôle de l'étape c., des périodes de densité maximale ou minimale desdits organismes filtrants.

**23.** Equipement selon l'une quelconque des revendications 10 à 22, dans lequel lesdits moyens de traitement comprennent un ou plusieurs programmes informatiques.

**24.** Produit de programme informatique, comprenant un code de programme stocké sur un milieu de stockage, le programme étant capable de coopérer avec un équipement selon l'une quelconque des revendications 10 à 23, de sorte qu'un procédé selon l'une quelconque des revendications 1 à 9 est réalisé.

FIG.1

**FIG.2**

EP 1 401 771 B1

CAP ⊗

net 400 μm

ON DECK SUCTION PUMP

LARVAE INLET

net 200 μm

net 30 μm

CAP ⊗

FIG.3

EP 1 401 771 B1

MONITORING MEANS

| FLUORESCENCE PROBE |
| TEMPERATURE SENSOR |
| SALINITY SENSOR |

ZOOPLANCTON
MONITORING MEANS

DATA COLLECTING AND
MANAGING UNIT

PROCESSING
MEANS

OPERATING MEANS

**FIG.4**

Panel a.

Panel b.

FIG. 5